# EUROPEAN PATENT APPLICATION

(11) **EP 4 495 740 A1**
(43) Date of publication of application: **22.01.2025**
(21) Application number: 23185940.6
(22) Date of filing: 17.07.2023
(51) Int. Cl.: G06F 3/01

(54) **A METHOD FOR PROVIDING AN AUGMENTED REALITY FOR A PERSON BY AN AUGMENTED REALITY DEVICE, A COMPUTER PROGRAM PRODUCT, A COMPUTER-READABLE STORAGE MEDIUM AS WELL AS AN AUGMENTED REALITY DEVICE**

(71) Applicant: Siemens Aktiengesellschaft, 80333 München (DE)
(72) Inventor: Labisch, Daniel, 76149 Karlsruhe (DE); Newman, Joseph, 82008 Unterhaching (DE); MacWilliams, Asa, 82256 Fürstenfeldbruck (DE); Scherer, Tim, 76185 Karlsruhe (DE)
(74) Representative: Siemens Patent Attorneys

(57) **Abstract**

The invention relates to a method for providing an augmented reality (12) for a person (14) on an augmented reality device (10) by the augmented reality device (10), comprising the steps of receiving at least one anchor information (26, 28) for an anchor object (18, 20) in surroundings (16) of the augmented reality device (10) by an receiving device (30) of the augmented reality device (10), wherein the surroundings (16) are to be augmented, and displaying the anchor information (26, 28) at an anchor position (32, 34) relative to the anchor object (18, 20) by a display device (36) of the augmented reality device (10). Furthermore the invention relates to a computer program product, a computer-readable storage medium, as well as to an augmented reality device (10) .

## Description

The present invention relates to a method for providing an augmented reality for a person on an augmented reality device by the augmented reality device according to the pending claim 1. Furthermore, the present invention relates to a computer program product, a computer-readable storage medium as well as an augmented reality device.

In particular industrial augmented reality applications are becoming increasingly popular and new requirements are emerging. One of which is the creation of rich augmented reality content and their correct placement in the real world.

Augmented reality content in this context is any virtual object which can be viewed in augmented reality or virtual reality devices appropriately. In industrial setting, augmented reality content, also known as holograms, typically consists of a three-dimensional object, for example a gauge with life values from a control centre or a PLC and manuals/P&ID diagrams. These holograms are usually located inside a so called "place". A place is a real-world environment.

Therefore, before showing the augmented reality an alignment has to be performed. In particular an alignment of the place has to be performed.

Therefore, the place can be built based on so-called anchors. Anchors are real-world-land-marks, that allow holograms, in particular the place, to be realigned in a specific location-place at a later time. Alignment is crucial for the correct placement of all holograms. An inaccurate alignment can cause misinterpreting's, as a hologram can be thought as linked to the wrong asset. In case of a hint "open that valve" opening the wrong valve can lead to tremendous consequences. Therefore, the user always needs to rely on the alignment and, in case the accuracy is not optimal, needs to be informed. As most users are non-expert in augmented reality additional information is required how to increase accuracy or what to do.

Alignment may be defined as the initial calculation of the position and orientation of the augmented reality device. Realignment is a repeated alignment for improving the alignment. Tracking may refer to the calculation of relative movements afterwards and is performed using standard libraries, whereas the alignment needs to be solved for applications and industrial contracts.

It is an object of the present invention to provide a method, a computer program product, a computer-readable storage as well as an augmented reality device, by which an improved augmented reality can be provided for a person.

This object is solved by a method, a computer program product, a computer-readable storage medium as well as an augmented reality device according to the independent claims. Advantageous embodiments are presented in the dependent claims.

One aspect of the invention relates to a method for providing an augmented reality for a person on an augmented reality device by the augmented reality device. At least one anchor information for an anchor object in surroundings of the augmented reality device is received by a receiving device of the augmented reality device, wherein the surroundings are to be augmented.

The anchor information is displayed at an anchor position relative to the anchor object by a display device of the augmented reality device. The anchor information therefore includes a position information of the anchor. The anchor information can be displayed in form of the virtual anchor object, wherein the the anchor information can be seen as an overlay to the anchor object in the augmented reality. Therefore, by cheking the position of the anchor abject and the overlayed position the alignemt can be rated.

In a preferred embodiment a request for confirming the correct displayed anchor position relative to the anchor object is generated by an electronic computer device of the augmented reality display device. An input of the person concerning the request is captured by an input device of the augmented reality device. The augmented reality is provided for the person on the display device depending on the captured input by the augmented reality device.

Therefore, an improved method for providing the augmented reality for the person is provided. In particular, for example after a manual alignment the small anchor information together with for example an individual label is shown on the anchor known in the place. Hence the person can easily identify alignment errors also for anchors in some distance. This may be especially useful in a so called one-anchor-alignment. In addition, a small menu may appear. There, alignment information can be shown.

The alignment may be inaccurate especially in some distance if the anchor objects used are too close together or if the relative positions of the scanned anchor objects diverge from the original relative positions. Also if all anchors objects are on a vertical line or close to it, the alignment is not robust. In case of a not reliable alignment, the person receives a hint together with a suggestion, for example; "please use more distant anchors", "please select anchors with a larger horizontal distance", or furthermore.

Therefore, transparency regarding the accuracy of the alignment, which is crucial in many applications, is realized. In a beneficial enhancement, if for example the person creates new holograms or interacts with existing ones but the current alignment is rated to be poor, the person can be asked to improve the alignment. This may be performed by scanning further arbitrary anchor objects, by searching specific anchors which are close to the person and for which position and appearance are presented to the person, at least roughly, and for example by showing all anchor objects and manually adjusting the coordinate system such that the virtual and real anchor objects match.

In a first enhancement the person is informed if he leaves for example the space where the anchor objects are available and is asked to create further ones.

Beside that it is very helpful to track the alignment accuracy during place and anchor creation process and safety accuracy of places and anchors as well as holograms therein. This may also be visualized by blurred anchors or showing a confidence sphere around the anchors. To improve accuracy, already during place creation, the user is informed if the anchor objects are too close together or if they are on vertical lines and hints are given where adding further anchor objects would be beneficial. As the depth estimation is crucial for accuracy in creating anchor objects and holograms the quality of depth estimation is incorporated. Hence, in case of bad estimation quality, for example a so called SLAM map (Simultaneously Localisation And Mapping) improvement is necessary before repositioning the anchor objects or hologram.

The accuracy rating of the anchor objects becomes a further input of the accuracy algorithm stated.

According to an embodiment a plurality of anchor information for a plurality of anchor objects are received and the plurality of anchor information is displayed at the corresponding anchor objects. Therefore, in particular more than one anchor object are captured in the surroundings/place, and the corresponding anchor information is shown. Therefore, the user can get an overview, of the accuracy of the alignment. Therefore, an improved augmented reality can be provided for the person.

In another embodiment the anchor object is identified in the surroundings by capturing a corresponding label for the anchor object in the surroundings. The label can be for example a QR-Code, a particular text or a particular object. In particular unique labels or markers which are large enough can be scanned on-the-fly by the augmented reality device and therefore the corresponding anchor information can be received by the augmented reality device. Therefore, an improved augmented reality can be provided.

In another embodiment depending on a decision criteria concerning a relative position of the anchor object to the augmented reality device a request for repositioning of the augmented reality device is generated. Therefore, if for example the augmented reality device may compute, that the anchor objects are inaccurate, the augmented reality device may request the person to reposition and therefore a new capturing of the surroundings may be provided. Therefore, after repositioning, the anchor information can be shown and the user can be asked to verify the alignment.

In another embodiment depending on a decision criteria concerning a relative position of the anchor object to the augmented reality device a request for selecting a new anchor object in the surrounding is generated. For example, the person can use a new anchor object in the surrounding and therefore compute the correct alignment.

In another embodiment after a positive input from the person, the anchor information is blanked on the display device. In particular, after the positive input, in particular that the alignment is fine, all anchor information gets invisible and only the augmented reality, in particular the holograms, may appear. Therefore, an improved augmented reality is provided for the person.

In another embodiment after a positive input from the person, the augmented reality is provided for the person. Therefore, just the augmented reality is provided for the person. In particular, the anchor information is hidden. Therefore, an improved augmented reality can be provided for the person.

In another embodiment the at least one anchor information is displayed in predetermined time intervals and/or the request is generated in predetermined time intervals. In particular, after for example the automatic alignment, using the world map, a hint may appear that the alignment was performed automatically, again all anchor objects may appear, and the user is asked to rate the alignment accuracy again. Therefore, the consistency of the augmented reality can be improved.

In another embodiment depending on a further input of the first person, the anchor information is displayed again and the request is generated again. In particular, if for example the person is in doubt about the alignment or high accuracy is required in this next task, the anchor object can be shown again to check alignment and, if necessary, perform a realignment. For realignment there may be two possibilities. For example, further anchors may be scanned and used together with the original ones, which is useful, if the person has moved away from the originally scanned anchor objects and there is a spatial rotational error. Second, a completely new alignment is performed and the old anchor objects are not used again, which is suitable, if there was a drift in the tracking during operation of the augmented reality device.

According to another embodiment an accuracy value for the positioning of the anchor object is determined and presented on the display device. Therefore, the person can see the accuracy value and for example, if the accuracy value is very low for the next coming step, a realignment can be performed by the person.

In another embodiment the accuracy value is determined depending on a distance between a position of the displayed anchor object and a position of the anchor object in the surroundings. For example, the relative distance of the scanned anchor object is compared between the scanned position and their known relative distances. Therefore, the accuracy value can be determined in an improved manner.

Alternatively the relative distances between the anchor objects can be used for determining the accuracy value.

In another embodiment the accuracy value is determined depending on a covariance matrix and/or a residuum value of the distance. In particular, a residuum may be computed which increases if the relative distances are not the same. An inaccurate alignment process could be one reason, as well as mechanical changes in the plant/place/surroundings. Also if there are errors in the anchor position, in particular in the digital twin, this may be obvious thereby. Furthermore, singular values are used for a covariance matrix and can be computed. The ratio between the first and the second singular value may be an indicator about the accuracy. In particular, the higher the singular values are, the better the accuracy is.

In particular, the method is a computer implemented method. Therefore, another aspect of the invention relates to a computer program product comprising program code means for performing a method according to the preceding aspect.

A still further aspect of the invention relates to a computer-readable storage medium comprising at least a computer program product according to the preceding aspect.

A still further aspect of the invention relates to an augmented reality device for providing an augmented reality for a person, comprising at least one receiving device, one display device, one input device, and one electronic computing device, wherein the augmented reality device is configured for performing a method according to the preceding aspect. In particular, the method is performed by the augmented reality device.

Advantageous embodiments of the method are to be regarded as advantageous embodiments of the computer program product, the computer-readable storage medium, as well as the augmented reality device. Therefore, the augmented reality device comprises means for performing the method.

In the context of the present disclosure, an object detection algorithm may be used. This object detection algorithm may be understood as a computer algorithm, which is able to identify and localize one or more objects within a provided input dataset, for example input image, by specifying respective bounding boxes or regions of interest, ROI, and, in particular, assigning a respective object class to each of the bounding boxes, wherein the object classes may be selected from a predefined set of object classes. Therein, assigning an object class to a bounding box may be understood such that a corresponding confidence value or probability for the object identified within the bounding box being of the corresponding object class is provided. For example, the algorithm may provide such a confidence value or probability for each of the object classes for a given bounding box. Assigning the object class may for example include selecting or providing the object class with the largest confidence value or probability. Alternatively, the algorithm can specify only the bounding boxes without assigning a corresponding object class.

Furthermore, as the object detection algorithm, a computer vision algorithms, which may also be denoted as machine vision algorithms or algorithms for automatic visual perception, may be considered as computer algorithms for performing a visual perception task automatically, may be used. A visual perception task, also denoted as computer vision task, may for example be understood as a task for extracting visual information from image data. In particular, the visual perception task may in several cases be performed by a human in principle, who is able to visually perceive an image corresponding to the image data. In the present context, however, visual perception tasks are performed automatically without requiring the support by a human.

For example, a computer vision algorithm may be understood as an image processing algorithm or an algorithm for image analysis, which is trained using machine learning and may for example be based on an artificial neural network, in particular a convolutional neural network.

For example, the computer vision algorithm may include an object detection algorithm, an obstacle detection algorithm, an object tracking algorithm, a classification algorithm, a segmentation algorithm, and/or a depth estimation algorithm.

Corresponding algorithms may analogously be performed based on input data other than images visually perceivable by a human. For example, point clouds or images of infrared cameras et cetera may also be analyzed by means of correspondingly adapted computer algorithms. Strictly speaking, however, the corresponding algorithms are not visual perception algorithms since the corresponding sensors may operate in domains, which are not perceivable by the human eye, such as the infrared range. Therefore, here and in the following, such algorithms are denoted as perception or automatic perception algorithms. Perception algorithms therefore include visual perception algorithms, but are not restricted to them with respect to a human perception. Consequently, a perception algorithm according to this understanding may be considered as computer algorithm for performing a perception task automatically, for example, by using an algorithm for sensor data analysis or processing sensor data, which may, for example, be trained using machine learning and may, for example, based on an artificial neural network. Also the generalized perception algorithms may include object detection algorithms, object tracking algorithms, classification algorithms and/or segmentation algorithms, such as semantic segmentation algorithms.

In case an artificial neural network is used to implement a visual perception algorithm, a commonly used architecture is a convolutional neural network, CNN. In particular, a 2D-CNN may be applied to respective 2D-camera images. Also for other perception algorithms, CNNs may be used. For example, 3D-CNNs, 2D-CNNs or 1D-CNNs may be applied to point clouds depending on the spatial dimensions of the point cloud and the details of processing.

The output of a perception algorithm depends on the specific underlying perception task. For example, an output of an object detection algorithm may include one or more bounding boxes defining a spatial location and, optionally, orientation of one or more respective objects in the environment and/or corresponding object classes for the one or more objects. An output of a semantic segmentation algorithm applied to a camera image may include a pixel level class for each pixel of the camera image. Analogously, an output of a semantic segmentation algorithm applied to a point cloud may include a corresponding point level class for each of the points. The pixel level classes or point level classes may, for example, define a type of object the respective pixel or point belongs to.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

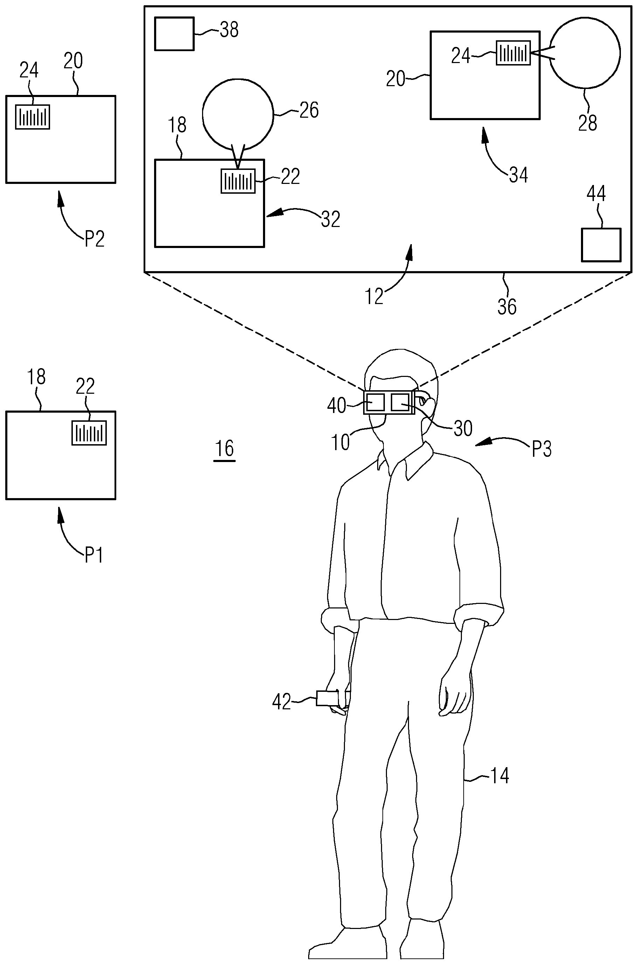

Therefore, the only FIG 1 shows a schematic perspective view according to an embodiment of an augmented reality device in the surroundings of the augmented reality device;

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

FIG 1 shows a schematic perspective view of an augmented reality device 10 for providing an augmented reality 12 for a person 14. The person 14/the augmented reality device 10 has surroundings 16. In particular the surroundings 16 may be for example an industrial plant. In the surroundings 16, as shown in FIG 1, a first anchor object 18 as well as a second anchor object 20 are provided. The first anchor object 18 comprises a first label 22 and the second anchor object 20 comprises a second label 24.

According to an embodiment of the invention a method for providing the augmented reality 12 is provided. At least one anchor information 26, 28 for the anchor object 18, 20 in the surroundings 16 is received by a receiving device 30 of the augmented reality device 10. The anchor information 26, 28 is displayed at an anchor position 32, 34 relative to the anchor object 18, 20 by a display device 36 of the augmented reality device 10. A request 38 for confirming the correctly displayed anchor position 32, 34 relative to the anchor object 18, 20 is generated by an electronic computing device 40 of the augmented reality device 10. An input of the person 14 concerning the request 38 is captured by an input device 42 of the augmented reality device 10. The augmented reality 12 is provided for the person 14 on the display device 36 depending on the captured input by the augmented reality device 10.

In particular, as shown in FIG 1, the first anchor object 18 provides a first anchor position 32 concerning the first anchor object 18 and a second anchor position 34 concerning the second anchor object 20. In particular, FIG 1 shows further that a plurality of anchor information 26, 28 for a plurality of anchor objects 18, 20 are received and the plurality of anchor information 26, 28 are displayed at the corresponding anchor objects 18, 20. Furthermore, the anchor object 18, 20 is identified in the surroundings by capturing a corresponding label 22, 24 for the anchor object 18, 20.

In another embodiment, depending on a decision criterion concerning a relative position P1, P2 of the anchor object 18, 20 to the augmented reality device 10 a request for repositioning of the augmented reality device 10 is generated. In particular, as shown in FIG 1, the first anchor object 18 may have a first position P1, the second anchor object 20 may have a second position P2, and the person 14/the augmented reality device 10 may have a third position P3.

In another embodiment, depending on a decision criterion concerning a relative position P1, P2 of the anchor object 18, 20 to the augmented reality device 10 a request for selecting a new anchor object 18, 20 in the surroundings 16 is generated. Furthermore, after a positive input from the person 14, the anchor information 26, 28 is blanked on the display device 26. Furthermore, after a positive input from the person 14, the augmented reality 12 is provided for the person 14.

In another embodiment, at least one anchor information 26, 28 is displayed in predetermined time intervals and the request 38 is generated in predetermined time intervals. Furthermore, depending on a further input of the person 14, the anchor information 26, 28 is displayed again and the request 38 is generated again.

Furthermore, an accuracy value 44 for the positioning of the anchor object 18, 20 is determined and presented on a display device 36. Furthermore, the accuracy value 44 is determined depending on a distance between a position of the displayed anchor object 18, 20 and a position of the anchor object 18, 20 in the surroundings 16. Furthermore, the accuracy value 44 is determined depending on a covariance matrix and/or a residuum value of the distance.

In particular, FIG 1 shows that after a manual alignment the small anchor information 26, 28 together with the individual label 22, 24 is shown at all anchor objects 18, 20 in the place/surroundings 16. Hence, the person 14 may easily identify alignment errors also for anchor objects 18, 20 in some distance. In addition, a small menu may appear. There, alignment information can be shown, for example, the accuracy value 44 can be shown.

The alignment may be inaccurate especially in some distance if the anchor objects 18, 20 used are too close together or if the relative position P1, P2 of the scanned anchor objects 18, 20 divert from the original relative positions. Also, if all anchor objects 18, 20 are on a vertical line or close to it, the alignment is not robust. In case of a not reliable alignment, the person 14 receives a hint together with a suggestion, for example "please use more distant anchor objects 18, 20", "please select anchor objects 18, 20 with a larger horizontal distance", or furthermore.

Depending on the shown anchor objects 18, 20, the person 14 may be asked, if alignment is "ok" and if the anchor objects 18, 20 should be used. This may for example be asked by showing buttons with "ok" or "cancel". Afterwards, all anchor information 26, 28 gets invisible and only with that, the holograms may appear as the augmented reality 12.

After the automatic alignment, using the world map, a hint may appear that the alignment was performed automatically, again all anchor objects 18, 20 may appear, and the person 14 is asked to verify the alignment accuracy.

If the person 14 is in doubt about the alignment or a high accuracy is required in his next task, the anchor objects 18, 20 can be shown again to check alignment, and, if necessary, perform a realignment. For realignment there may be two possibilities. A first possibility may be further anchor objects 18, 20 that can be scanned and used together with the original ones, which may be useful, if the person 14 has moved away from the original scanned anchor objects 18, 20 and there is especially a rotational error. A second possibility is a completely new alignment and the old anchor objects 18, 20 are not used again, which is suitable, if there was a drift in the tracking during operation of the augmented reality device 10.

To compute the accuracy value, different approaches may be combined. For example, the relative distances of the scanned anchor objects 18, 20 are compared between the scanned positions and their known relative distances. A residuum may be computed which increases if the relative distances are not the same. An inaccurate alignment process could be one reason, as well as mechanical changes in the surroundings 16. Also, if there are errors in the anchor position, for example in the digital twin, this becomes obvious thereby.

Singular values for covariance matrix can be computed. The ratio between the first and the second singular value may be an indicator of accuracy, in particular the higher the better.

The closer the anchor objects 18, 20 are projected on a horizontal plane, the larger the rotational error is in general. A small rotational error is negligible around these anchor objects 18, 20, but leads to higher positional errors in some distance. Hence, depending on the relative positions of the anchor objects 18, 20, an uncertainty analysis is performed to compute an operational distance up to the augmented reality device 10 may be used. Leaving that the person 14 gets a hint and is asked to check alignment and, if necessary, perform a realignment.

Unique labels 22, 24 are markers which are large enough to be scanned on-the-fly while walking through the surroundings 16. They can be used as well for automatically checking the alignment accuracy as well as for automatically realigning. Also the person 14 may be informed and asked in contrast to an automatical alignment depending on the use cases.

## Claims

1. A method for providing an augmented reality (12) for a person (14) on an augmented reality device (10) by the augmented reality device (10), comprising the steps of:
- receiving at least one anchor information (26, 28) for an anchor object (18, 20) in surroundings (16) of the augmented reality device (10) by an receiving device (30) of the augmented reality device (10), wherein the surroundings (16) are to be augmented; and
- displaying the anchor information (26, 28) at an anchor position (32, 34) relative to the anchor object (18, 20) by a display device (36) of the augmented reality device (10).

2. The method according to claim 1, wherein a plurality of anchor information (26, 28) for a plurality of anchor objects (18, 20) are received and the plurality of anchor information (26, 28) are displayed at the corresponding anchor objects (18, 20) .

3. The method according to claim 1 or 2, wherein the anchor object (18, 20) is identified in the surroundings (16) by capturing a corresponding label (22, 24) for the anchor object (18, 20) in the surroundings (16).

4. The method according to any one of claims 1 to 3, wherein depending on a decision criterion concerning a relative position (P1, P2) of the anchor object (18, 20) to the augmented reality device (10) a request for repositioning of the augmented reality device (10) is generated.

5. The method according to any one of claims 1 to 4, wherein depending on a decision criterion concerning a relative position (P1, P2) of the anchor object (18, 20) to the augmented reality device (10) a request for selecting a new anchor object (18, 20) in the surroundings (16) is generated.

6. The method according to any one of claims 1 to 5, wherein after a positive input from the person (14), the anchor information (26, 28) is blanked on the display device (36).

7. The method according to any one of claims 1 to 6, wherein after a positive input from the person (14), the augmented reality (12) is provided for the person (14).

8. The method according to any one of claims 1 to 7, wherein the at least one anchor information (26, 28) is displayed in predetermined time intervals and the request (38) is generated in predetermined time intervals.

9. The method according to any one of claims 1 to 8, wherein depending on a further input of the person (14), the anchor information (26, 28) is displayed again and the request (38) is generated again.

10. The method according to any one of claims 1 to 9, wherein an accuracy value (44) for the positioning of the anchor object (18, 20) is determined and presented on the display device (36).

11. The method according to claim 10, wherein the accuracy value (44) is determined depending on a distance between a position of the displayed anchor object (18, 20) and a position of the anchor object (18, 20) in the surroundings (16).

12. The method according to claim 11, wherein the accuracy value (44) is determined depending on a covariance matrix and/or a residuum value of the distance.

13. A computer program product comprising program code means for performing a method according to any one of claims 1 to 12.

14. A computer-readable storage medium comprising at least the computer program product according to claim 13.

15. An augmented reality device (10) for providing an augmented reality (12) for a person (14), comprising at least one receiving device (30), one display device (36), one input device (42), and one electronic computing device (40), wherein the augmented reality device (10) is configured for performing a method according to any one of claims 1 to 12.
